# EUROPÄISCHE PATENTANMELDUNG

(11) **EP 0 666 453 A2**
(43) Veröffentlichungstag der Anmeldung: **09.08.1995**
(21) Anmeldenummer: 95101409.1
(22) Anmeldetag: 02.02.1995
(51) Int. Cl.: F24F 3/12

(54) **Verfahren und Vorrichtung zum Reinigen und Befeuchten von Luft**

(30) Priorität: 03.02.1994 DE 4403358; 19.08.1994 DE 4429502
(71) Anmelder: Maschinenfabrik Günther Zippel, D-93073 Neutraubling (DE)
(72) Erfinder: Zippel, Günter, 93073 Neutraubling (DE)
(74) Vertreter: Wasmeier, Alfons, Dipl.-Ing.

(57) **Zusammenfassung**

Ein Luftreinigungs- und Befeuchtigungsgerät besteht aus einem Ansaugteil, einem Lufteintritt (2), einem Filter (3) an der Lufteintrittsöffnung (2), einem Gebläse (4) mit Motor, einem Luftreinigungsteil mit UV-Entkeimungslampe (8), und einem Wasserführungsteil, in dem die entkeimte Luft in Kontakt mit Wasser gebracht wird, bevor sie in den Raum abgegeben wird. Der Wasservorrat ist durch eine in einer Wasserwanne (9) angeordnete Wassermasse mit großer Oberfläche stehenden Wassers gebildet. Die Wasserwanne (9) ist mit einer im Abstand über der Wasseroberfläche liegenden, abnehmbaren Abdeckplatte abgedeckt. Das Gehäuse (1) weist einen Luftführungskanal (6) auf, dessen einer Teil innerhalb des Gehäuses (1) ausgebildet ist und dessen anderer Teil durch die Wasseroberfläche, die Seitenwände (14) der Wanne (9) und der Abdeckplatte über der Wasseroberfläche gebildet ist. Das austrittsseitige Ende des Luftführungskanals (6) ist als Luftaustrittsöffnung (2) der Wanne (9) ausgebildet, die oben durch die Abdeckplatte, seitlich durch die Seitenwände (14) und innen durch die Wannenvorderwand begrenzt ist.

## Beschreibung

Die Erfindung betrifft ein Verfahren zum Reinigen und Befeuchten von Luft nach dem Oberbegriff des Anspruches 1 sowie ein Luftreinigungs-und -befeuchtungsgerät nach dem Oberbegriff des Anspruches 4.

Bekannte Methoden und Geräte zum Befeuchten von Luft basieren in der Regel darauf, daß der von einem Gebläse erzeugte Luftstrom durch einen versprühten Wassernebel oder durch einen in Bewegung befindlichen Wasserstrahl, vorzugsweise in Umlauf gehaltenes rieselndes Wasser, geführt wird, wobei der Luftstrom Feuchtigkeit aufnimmt. Des weiteren sind derartige bekannte Geräte aufwendig in der Herstellung und im Betrieb.

Aufgabe der Erfindung ist es, ein gattungsgemäßes Verfahren bzw. ein gattungsgemäßes Gerät für den Wohnbereich so auszugestalten, daß ein Meeresklima in Verbindung mit einem stehenden Wasservorrat erzielt wird.

Des weiteren ist Aufgabe der Erfindung, ein Gerät zu schaffen, das die Raumluft von Schmutzpartikeln, Keimen und Bakterien befreit.

Aufgabe der Erfindung ist ferner ein Gerät, mit dem die Raumluft mit Mineralien und/oder Geschmacksstoffen angereichert werden kann.

Dies wird gemäß der Erfindung mit den Merkmalen des Anspruches 1 bzw. des Anspruches 4 erreicht. Weitere Ausgestaltungen der Erfindung sind Gegenstand der Unteransprüche.

Mit dem Verfahren bzw. Gerät nach vorliegender Erfindung erreicht, daß die Luft in den entsprechenden Räumen von Schmutz, Keimen und Bakterien befreit wird, daß die Luft mit wertvollen Mineralstoffen angereichert wird, daß eine optimale Luftfeuchtigkeit erzielt und daß das Wohlbefinden durch entspannendes Klima in den Räumen gesteigert wird. Hierzu wird der von einem Gebläse stammende, durch ein Filter geführte und durch eine UV-Lampe entkeimte Luftstrom über eine Wasseroberfläche so bewegt, daß die natürlichen Bedingungen am Meer simuliert werden, nämlich ein Luftstrom über die Wasseroberfläche streicht und der Luftstrom dabei Sauerstoff aus dem Wasservorrat entnimmt. Damit werden die am Strand herrschenden Bedingungen beim Zusammenwirken von Meeresoberfläche und Luftzirkulation unmittelbar über dieser Oberfläche simuliert, also ein Raumklima erzeugt, das den natürlichen Bedingungen am Meer angepaßt ist. Des weiteren wird mit der Erfindung erreicht, daß der Benutzer des Gerätes die Wasserfläche, über die der Luftstrom geführt wird, jederzeit sieht; die Wasseroberfläche wird durch den darüber hinweggeführten Luftstrom gekräuselt oder in Wellen versetzt, was den natürlichen Bedingungen am Meer einschließlich der Wellenbildung sehr nahe kommt.

Das Meer wird mit vorliegender Erfindung durch eine an das Gehäuse angesetzte großflächige Wanne simuliert, die mit einem stehenden Wasservorrat gefüllt ist. Im Abstand über der Wasseroberfläche ist eine transparente Abdeckplatte vorgesehen, die auf den Seitenwänden der Wanne aufliegt und die mit der Vorderwand der Wanne einen Austrittsspalt bildet, durch den der mit Feuchtigkeit und Sauerstoff angereicherte Luftstrom in den Raum abgegeben wird. Zwischen Oberkante des Wasservorrats und Unterseite der Abdeckplatte ist dabei ein kanalförmiger, exakt begrenzter Luftströmungspfad ausgebildet.

Bei einer speziellen Ausführungsform der Erfindung ist die Abdeckplatte der Wasserwanne wellenförmig ausgebildet, wobei die Wellungen in Strömungsrichtung des Luftstromes verlaufen, so daß damit für den Benutzer der Eindruck einer welligen Wasseroberfläche entsteht. In weiterer Ausgestaltung der Erfindung ist in die Wanne eine Wellenerzeugungsvorrichtung eingebaut, die die Wasseroberfläche in Wellen versetzt. Eine derartige Wellenerzeugungsvorrichtung ist beispielsweise als Schaufelrad ausgebildet, das die Wasseroberfläche in Wellenbewegung hält, wobei der Grad der Welligkeit durch die Drehzahl des Schaufelrades, das motorisch angetrieben ist, verändert werden kann. Durch das Schlagen des Wassers mit Hilfe des rotierenden Schaufelrades wird die Aufnahme von Sauerstoff in dem über die Wasseroberfläche hinwegstreichenden Luftstrom verbessert und eine Sauerstoffanreicherung des Wassers in der Wanne erreicht. Des weiteren wird durch eine derartige Wellenerzeugungsvorrichtung ein Meeresrauschen simuliert, so daß nicht nur optisch, sondern auch akustisch Meeresbedingungen in Verbindung mit der Befeuchtung und Reinigung des Luftstromes, der eine Meeresbrise simuliert, erreicht wird.

Diese Wirkung kann dadurch verstärkt bzw. verbessert werden, daß zusätzlich Mineralstoffe, Duftstoffe und/oder Geschmacksstoffe verwendet werden, die beispielsweise als aromatisches Öl auf der Wasseroberfläche, als Tablette im Wasservorrat, als Spray im Luftstrom usw. vorgesehen werden, so daß der durch das Gerät hindurchströmende Luftstrom diese Zusatzstoffe aufnimmt und an den umgebenden Raum abgibt. Entsprechende Zusatzstoffe, z.B. Mineralstoffe oder Duftstoffe können beispielsweise auch an der Austrittsöffnung des Luftstromes nach Durchströmen der Wasserwanne vorgesehen sein.

In weiterer Ausgestaltung der Erfindung sind der Gebläseabschnitt und die Wasserwanne bzw. -schale voneinander lösbar und aneinander ansetzbar bzw. ansteckbar, so daß die Wasserschale auf einfache Weise entfernt, das Wasser entleert, die Schale gereinigt und frisches Wasser eingebracht werden kann. Um das Nachfüllen des Wassers in der Wasserschale zu vereinfachen, ist die Deckplatte abnehmbar ausgebildet und auf die Seitenwände der Wasserschale aufgelegt. Bei einer gewellten Deckplatte sind damit die oberen Begrenzungen der beiden Seitenwände der Wasserschale kongruent wellenförmig ausgebildet. Bei einer derartigen Ausführungsform, bei der die Wasserschale vom Gehäuse lösbar ist, ist es zweckmäßig, das Schaufelrad (soweit vorhanden) in den Gehäuseseitenwänden zu lagern, so daß beim Entfernen der Wasserschale das Schaufelrad unverändert in den Gehäuseseitenwänden verbleibt. Die Wasserschale wird beispielsweise an das Gebläsegehäuse angesteckt, mittels Rasten, Verriegelungen, oder dgl. befestigt. Zur einfachen Bedienung und Wartung des Gerätes ist es von besonderer Bedeutung, daß die Wasserschale selbst keine Antriebselemente oder elektrischen Teile aufweist, die bei einem Lösen der Wasserschale von dem Gebläsegehäuse getrennt werden müßten.

Das Gerät nach der Erfindung weist ein besonders kompaktes und niedriges Gehäuse auf, an das sich die den bestehenden Wasservorrat aufnehmende Wasserwanne anschließt. Die Kombination aus Gerätegehäuse und Wasserwanne hat eine große Grundfläche und damit eine extrem günstige Standfestigkeit. Durch die großflächige Wasserwanne wird ferner eine große Wasseroberfläche erreicht, so daß ein besonders intensiver Kontakt zwischen dem durch das Gebläse erzeugten Luftstrom und dem Wasservorrat erzielt wird. Die Lufteintrittsöffnung hat etwa die Breite des Luftführungskanals, so daß ein großer Eintrittsquerschnitt vorgesehen ist. Das Gebläse ist durch einen seitlich angebrachten Schalter in mindestens zwei Stufen betätigbar. Ein weiterer Schalter dient zum Ein- und Ausschalten des Schaufelradantriebs oder eines entsprechenden Pumpenantriebs, der anstelle eines Schaufelrades die Wassermenge in der Wanne in Bewegung setzt.

Mit der Erfindung wird ferner vorgeschlagen, in der Wasserwanne eine Vernebelungs- bzw. Zerstäubungsvorrichtung, z. B. einen Ultraschallschwinger, anzuordnen, um an der Wasseroberfläche Wasser zu vernebeln bzw. zu zerstäuben. Das vernebelte bzw. zerstäubte Wasser zwischen Wasseroberfläche und Abdeckplatte wird dabei von dem hindurchströmenden, aus dem Gebläse stammenden Luftstrom an der Austrittsstelle der Wasserwanne als Nebel bzw. Gischt abgegeben und simuliert in der Nähe des Gerätes in gewissem Umfang den Effekt einer Gischt in der Brandung. Die Wirkung wird dadurch erhöht, daß in das Wasser Mineralsalze gegeben werden, die in Wasser aufgelöst zusammen mit dem Nebel aus dem Gerät abgegeben werden. Ein entsprechender Effekt läßt sich auch mit Hilfe einer Pumpe mit Zerstäuberdüse erreichen, indem die Pumpe Wasser aus der Wanne durch die Zerstäuber drückt und das Wasser über der Wasseroberfläche zerstäubt wird, so daß ein feiner Wassernebel am Ausgang des Gerätes vorhanden ist. Anstelle einer motorisch angetriebenen Pumpe mit Zerstäuber kann gemäß der Erfindung auch ein Druckbalgen verwendet werden, der eine Zerstäuberdüse aufweist und der kontinuirlich durch eine auf ihn Druck ausübende, z. B. exzentrische Vorrichtung, beaufschlagt wird, so daß aus dem mit Wasser gefüllten, im Wasservorrat angeordneten Gummiballen gesteuert Wassernebel erzeugt werden kann.

Zusätzlich zum Hindurchleiten des Luftstromes durch den Raum zwischen Abdeckplatte und Wasseroberfläche innerhalb der Wasserwanne und dem dadurch erzielten Effekt der Befeuchtung der aus dem Gerät abgeführten Luft wird mit der Erfindung vorgeschlagen, an der Abdeckplatte oder an der Wanne befestigt eine Staufläche anzuordnen, die den Luftstrom aus dem Gebläse beim Durchgang durch die Wanne in den Wasservorrat drückt, so daß die Luft durch das Wasser geführt wird und dadurch eine natürliche Luftreinigung erreicht wird. Die Staufläche bzw. das Stauelement kann eine im wesentlichen über die Breite der Wanne verlaufende Platte sein, die z.B. mit ihrem oberen Ende an der Abdeckplatte befestigt ist und deren unteres Ende in das Wasser eintaucht, wobei die Stauplatte in Richtung des Luftstromes schräg nach vorne geneigt sein kann, um den Luftstrom durch den Wasservorrat zu drücken. Wenn zusätzliche Wirbelungen erreicht werden sollen, kann die Staufläche auch mit entgegengesetzer Neigung angeordnet sein. Wahlweise kann die Stauplatte auch oberhalb der Wasseroberfläche enden, wobei dann nur eine begrenzte Menge an Luft durch die obere Wasserschicht geführt wird. Die Stauplatte kann entweder massiv oder mit Durchbrechungen ausgebildet sein, so daß der Anteil an Luft, der durch die Wasseroberfläche gedrückt wird, gesteuert werden kann. Hierzu kann die Platte z.B. auch jalousieförmig oder aber als Doppelwand mit Öffnungen in beiden Wänden ausgebildet sein, die mehr oder weniger in Deckung miteinander gebracht werden können.

Desweiteren wird mit der Erfindung vorgeschlagen, am eintrittsseitigen Ende der Wasserwanne ein Gewirk- bzw. Gestrickgebilde in Form einer aufrechten Wand oder Platte vorzusehen, das zu einem wesentlichen Teil oberhalb der Wasseroberfläche und das teilweise im Wasser angeordnet sein kann. Über dieses Gewirk bzw. Gestrick wird Wasser aus der Wanne, das z. B. mit Mineralsalz versetzt ist, kontinuierlich oder intermittierend von oben nach unten geschickt, und zwar mit Hilfe einer beispielsweise im Gebläsegehäuse angeordneten Pumpe, deren Ansaugrohr im Wasservorrat der Wanne endet und deren Abgaberohr oberhalb des Gewirks bzw. Gestricks endet. Das Abgaberohr führt das hochgepumpte Wasser einem Schlauch- oder Rohrstück zu, das quer zur Wanne und parallel zum Gewirk bzw. Gestrick verläuft. Dieses Rohr- oder Schlauchstück ist mit einer Vielzahl von Löchern (ähnlich einem Gartenschlauch) oder Düsen versehen, durch die das Wasser auf die Gewirk-bzw. Gestrickwand träufelt oder gesprüht wird. Damit wird ein kontinuierlicher Wasserumlauf geschaffen, und mit dem herabfließenden Wasser wird eine Wassergischt und gleichzeitig eine Sauerstoffanreicherung erzielt, die den Effekt einer Saline simuliert und die die von dem erfindungsgemäßen Luftbefeuchtungs- und -reinigungsgerät gelieferte Luft verbessert.

Nachstehend wird die Erfindung in Verbindung mit der Zeichnung anhand von Ausführungsbeispielen erläutert. Es zeigt:
- Fig. 1: eine schematische Schnittansicht des Gerätes nach der Erfindung,
- Fig. 2: die Wasserschale gelöst von dem Gerät mit abgenommenem Deckel,
- Fig. 3: einen Schnitt durch eine Ausführungsform des Gerätes nach der der Erfindung,
- Fig. 4: eine Ausführungsform der Wasserschale mit Deckel,
- Fig. 5: eine schematische Anordnung eines Ultraschallschwingers in der Wasserwanne,
- Fig. 6: eine schamatische Anordnung einer Pumpe mit Zerstäuber in der Wasserwanne,
- Fig. 7: schematisch eine andere Ausführungsform eines Pumpantriebes,
- Fig. 8: eine Staufläche in Verbindung mit der Abdeckplatte und der Wasserwanne,
- Fig. 9: eine schematische Anordnung der Wasserwanne mit Gewirk- bzw. Gestrickwand,
- Fig. 10: eine schematische Rückansicht der Figur 9,
- Fig. 11: schematisch ein Funktionsbild der Pumpanordnung mit der Gewirk- bzw. Gestrickwand,
- Fig. 12 - 16: eine spezielle, bevorzugte Ausführungsform der Erfindung, bei der darstellt

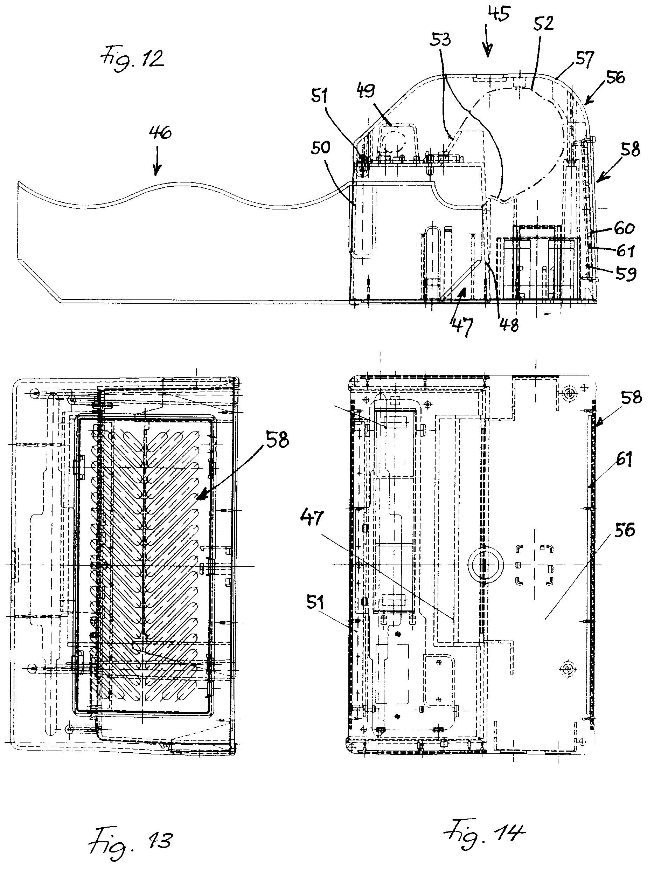

- Fig. 12: ein Seitenansicht des Gerätes,

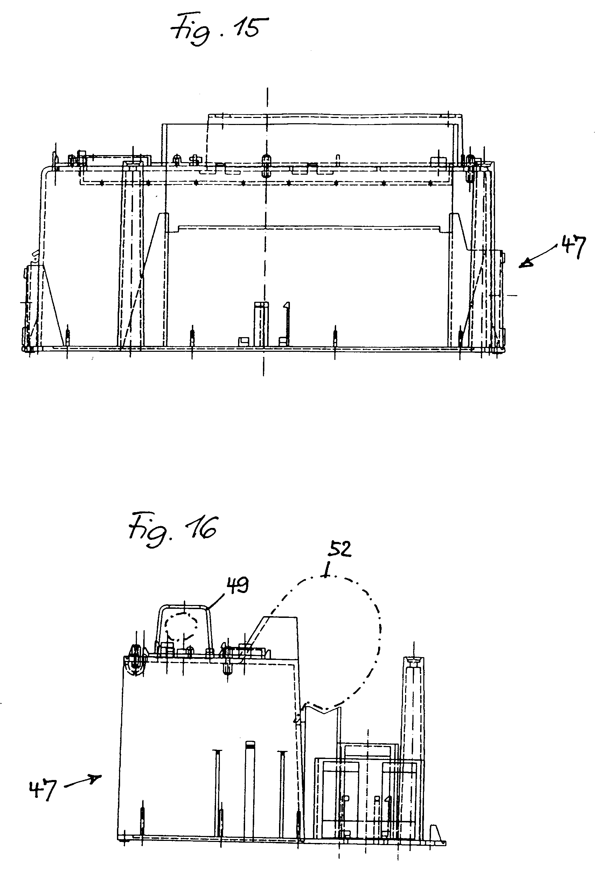

- Fig. 13: eine Ansicht des Gerätes nach Fig. 12 von hinten,
- Fig. 14: eine Aufsicht auf das Gerät nach Fig. 12 (ohne Wasserschale)
- Fig. 15: einen Schnitt längs der Linie I-I der Fig. 14, und
- Fig. 16: einen Schnitt II-II durch ein Gerät nach der Fig. 14.

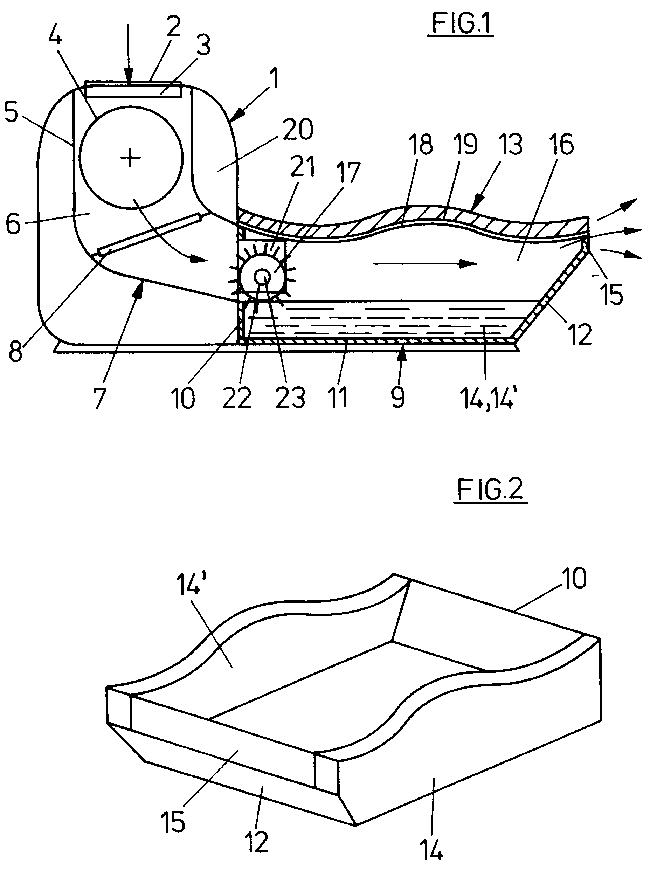

Bei der schematischen Ausführungsform nach Fig. 1 weist ein Gehäuse 1 auf der Oberseite eine Lufteintrittsöffnung 2 mit einem mechanischen Filter 3 auf. Unterhalb der Eintrittsöffnung 2 ist ein motorisch angetriebener Querstromlüfter 4 angeordnet, der von Wandungen 5 eines Luftführungskanals 6 umschlossen ist. Die geschlossene Wandung 5 ist bei 7 im unteren und vorderen Bereich aus einer etwa vertikalen in eine etwa horizontale Richtung gekrümmt. Im Kanal 6 ist eine UV-Entkeimungsleuchte 8 angeordnet, die der Luftstrom durchströmt. Mit 9 ist eine Wasserwanne bzw. Wasserschale dargestellt, die mit dem Gebläsegehäuse 1, und zwar an dessen rückwärtigem Teil 10 lösbar verbunden ist. Mit 11 ist der Boden der Wanne 9, mit 12 die Vorderwand, mit 13 die obere Abdeckplatte, mit 14, 14' die beiden Seitenwandungen und mit 15 die Austrittsöffnung dargestellt, durch die der behandelte Luftstrom aus dem Gerät mit Wanne in den Raum abgegeben wird. 16 bezeichnet den Luftströmungskanal über der Oberfläche des Wasservorrats in der Wanne 9. Mit 17 ist ein Schaufelrad dargestellt, das einen elektrischen Antrieb (nicht dargestellt) aufweist und das von oben in den Wasservorrat eingreift, um eine bewegte Wasseroberfläche zu erzielen - das Schaufelrad ist ein Element, das für die Funktionsweise der erfindungsgemäßen Vorrichtung als Zusatzelement eingesetzt werden kann. Mit 18 ist die Oberkante der Seitenwandungen 14 der Schale 9, mit 19 die zugeordnete, konforme Unterseite der Abdeckplatte 13 bezeichnet. Die Querschnittsflächen 18 und 19 sind in der speziell dargestellten Ausführungsform wellig ausgebildet und stehen kongurent miteinander in Eingriff. Die Seitenwandungen 20 des Gehäuses 1 weisen Ansätze 21 mit Lagerstellen 22 zur Aufnahme der Achse 23 des Schaufelrades 16 auf. Die Wasserschale 9 ist an das Gebläsegehäuse 1 im Betriebszustand angesetzt und mit ihr z.B. durch Steckverbindung, Rastverbindung oder dgl. so befestigt, daß die Wasserschale 9 einfach und schnell von dem Gebläsegehäuse 1 getrennt werden kann, ohne daß irgendwelche antreibenden oder elektrischen Teile gelöst werden müssen.

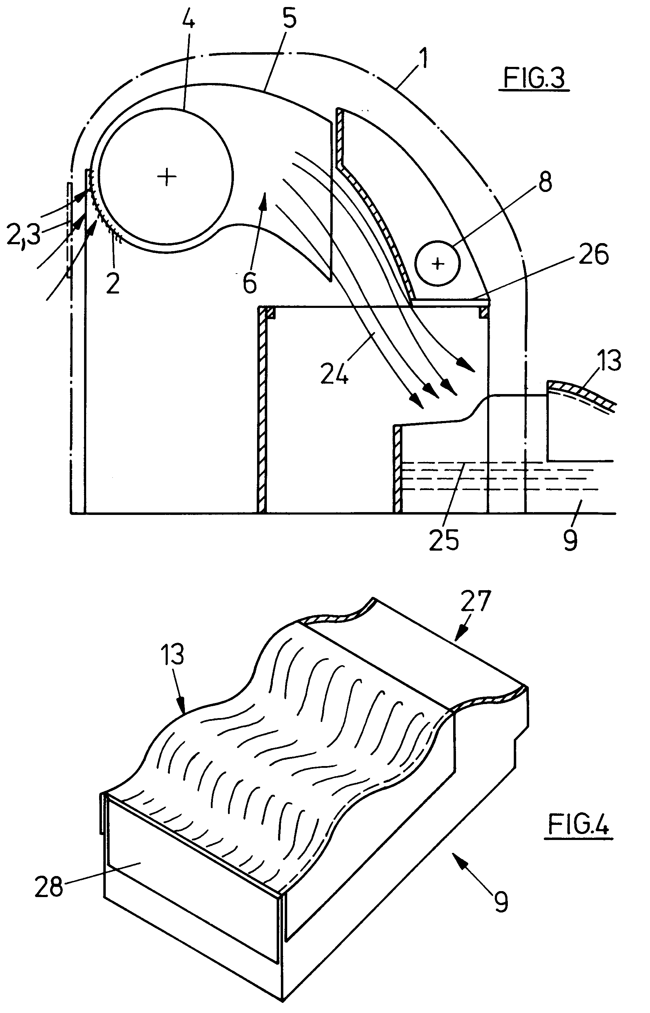

In Fig. 3 ist schematisch und im Schnitt eine spezielle Ausführungsform der Vorrichtung nach der Erfindung mit (im rechten Teil) angedeuteter Wasserwanne 9 gezeigt. Bei der Ausführungsform nach Fig. 3 sind für gleiche Teile die gleichen Bezugszeichen wie in Fig. 1 gewählt. Der Luftstrom 24 tritt aus dem Luftführungskanal 6 schräg nach unten aus und wird in die Wanne 9 zwischen Abdeckplatte 13 und Wasseroberfläche 25 in der Wanne 9 geführt. Mit 26 ist eine für die Strahlung der UV-Entkeimungsleuchte 8 durchlässige Folie oder Platte bezeichnet, durch die hindurch die Strahlung auf den Luftstrom wirkt.

In Fig. 4 ist die Wanne 9 mit der aufgesetzten Abdeckplatte 13 dargestellt. Der rückwärtige Teil 27 der Wanne ist in das Gehäuse 1 eingeschoben und rastet dort in der Endstellung ein. An der Vorderseite der Wanne ist ein Austritt 28 für den Luftstrom dargestellt, dessen Querschnitt durch eine Verschiebeplatte oder dgl. veränderbar ausgebildet sein kann, um die Geschwindigkeit des austretenden Luftstroms variieren zu können.

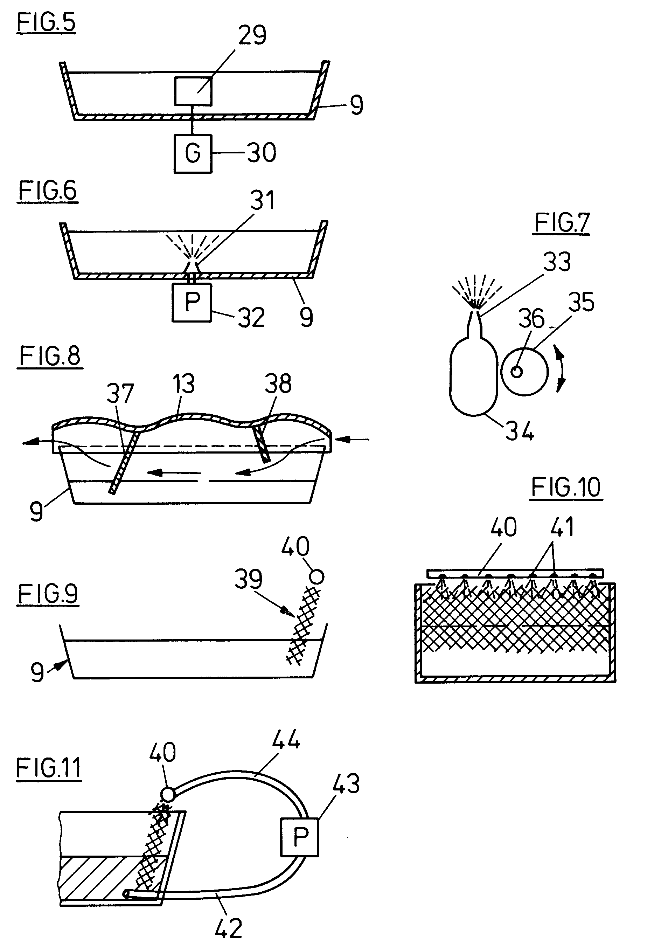

In weiterer Ausgestaltung der Neuerung ist, wie in Fig. 5 schematisch dargestellt, eine Vernebelungs- und Zerstäubungsvorrichtung 29 im Wasservolumen innerhalb der Wanne 9 vorgesehen, die über einen Generator 30 aktiviert wird. Damit wird erreicht, daß ein Teil des Wasservolumens in der Wanne 9 versprüht wird und der aus dem Lüftergerät stammende Luftstrom zumindest einen Teil des Sprühwassers mitnimmt und an der Austrittsstelle in den Raum abgibt. Eine alternative Ausführungsform ist in Fig. 6 dargestellt, bei der eine Zerstäuberdüse 31 innerhalb des Wasservolumens der Wand 9 angeordnet ist und von einer Pumpe 32 aus betrieben wird. Anstelle einer Pumpe 32 kann, wie in Fig. 7 schematisch angedeutet, die Zerstäuberdüse 33 mit einem flexiblen Behälter 34 verbunden sein, der über eine angetriebene Exzenterscheibe 35 beaufschlagt wird. Die Exzenterscheibe 35 ist auf der Welle 36 befestigt.

Fig. 8 zeigt schematisch, wie der Luftstrom des Gebläses beim Durchströmen zwischen Abdeckplatte und Wasservolumen der Wanne 9 mechanisch beeinflußt und abgelenkt werden kann. Hierzu ist beispielsweise eine Stauwand 37 vorgesehen, die an der Abdeckplatte 13 befestigt sein kann und nach unten ragt. Die Staubplatte 37 kann über der Wasseroberfläche enden und damit den Querschnitt für den Luftstrom begrenzen, sie kann jedoch auch in das Wasservolumen eintauchen, so daß der durchströmende Luftstrom gezwungen ist, durch das Wasser hindurchzuströmen, was einen zusätzlichen Reinigungs- und Befeuchtungseffekt ergibt. Mit 38 ist alternativ eine Stauplatte angedeutet, die über der Wasseroberfläche endet. Eine derartige Stauplatte, Staufläche oder Stauelement kann wahlweise auch an den Seitenflächen der Wanne befestigt sein.

Um mit der erfindungsgemäßen Vorrichtung einen Effekt zu erzielen, der beispielsweise bei einer Saline erzielt wird, wird in weiterer Ausgestaltung der Erfindung vorgeschlagen, daß am Wanneneingang eine Gewirk- oder Gestrickwand 39 aus Draht oder Kunststoff vorgesehen ist, die vertikal oder leicht zur Vertikalen geneigt angeordnet ist und die von oben mit Wasser aus der Wanne 9 berieselt wird, so daß dieses Wasser die Gewirk- bzw. Gestrickwand nach abwärts rieselt und dabei eine Sauerstoffanreicherung in dem herabrieselnden Wasser erzielt wird. Wenn das Wasser in der Wanne mit Mineralsalzen oder dgl. Zusatzstoffen versehen wird, was bei allen Ausführungsformen der Erfindung möglich ist, werden bestimmte Nebeneffekte erzielt, die geruchsbeeinflussend sind oder auch heilende Wirkung haben können. Gleichzeitig wird durch das gerabrieselnde Wasser in Verbindung mit dem Luftstrom eine Art Gischt erzeugt, die den Effekt des Meeres simuliert. Oberhalb der Gewirk- bzw. Gestrickwand 39 ist eine Schlauchleitung 40 angeordnet, aus der über einzelne Öffnungen (ähnlich einem Gartenschlauch) oder Düsen 41 feine Wasserstrahlen oder Wassernebel austreten, die längs der Gewirk- bzw. Gestrickwand 39 nach abwärts rieseln und wieder in das Wasservolumen zurückgelangen. Das Wasser wird aus dem Wasservolumen in der Wanne 9 über eine Ansaugleitung 42 mit Hilfe einer Pumpe 43 einer Zulaufleitung 44 und der Leitung 40 zugeführt.

In den Figuren 12 - 16 ist die Vorrichtung nach der Erfindung in einen praktisch ausgeführten Beispiel in mehreren Ansichten dargestellt. Die Vorrichtung besteht aus dem eigentlichen Gerät 45 und der damit gekoppelten Wasserwanne 46, die im Betriebszustand zum Teil in das Gerät eingesetzt und darin verriegelt ist. Das Gerät 45 weist ein Unterteil 47 mit Träger 48 für die Aufnahme der Wanne 46, des UV-Lampengehäuses 49, des Gewirkteiles 50 und des Verteilerbalkens 51 auf. Ferner nimmt das Unterteil 47 die Tragvorrichtungen für die verschiedenen Schalter, die Pumpe, die Tragvorrichtungen für den Lüfter 52 und die Wandungen 53 des Luftführungskanales, die Aufnahme 54 für die Pumpe 55, die Träger für die verschiedenen Schalter und dergl. auf. Das Oberteil 56 umfaßt die Abdeckhaube 57, die Filteranordnung 58 usw. Die Filteranordnung 58 besteht aus einem fest mit der Abdeckhaube 57 verbundenen Innengitter 59, einen lösbar mit der Abdeckhaube 57 verbundenen Außengitter 60 und einem zwischen beiden angeordneten Filterfließ 61, daß durch Öffnen des Außengitters 60 auswechselbar ist. Das Außengitter 60 ist z.B. steckbar, schraubbar oder dergl.

## Patentansprüche

1. Verfahren zum Reinigen und Befeuchten von Luft in begrenzten Räumen, insbesondere Wohnräumen, bei dem ein Luftstrom in ein Gerätegehäuse eingesaugt, der Luftstrom am Gehäuseeintritt gefiltert, durch UV-Strahlung entkeimt, anschließend mit einem Wasservorrat in Kontakt gebracht und schließlich gereinigt und befeuchtet in die Umgebung abgegeben wird,
**dadurch gekennzeichnet,** daß der gereinigte Luftstrom mittels Gebläse durch ein kanalförmiges Gerätegehäuse geführt und am Gehäuseaustritt in Verlängerung des Gehäusekanals über eine in einer mit dem Gerätegehäuse verbundenen Wanne oder dgl. Behälter befindliche,stehende Wasseroberfläche zwischen einem durch die Wasseroberfläche und eine im Abstand dazu angeordnete Abdeckplatte gebildeten Luftkanal geführt und anschließend an den Raum abgegeben wird.

2. Verfahren nach Anspruch 1, dadurch gekennzeichnet, daß die Luftführung durch den Luftkanal zwischen Wasseroberfläche und darüberliegender Abdeckplatte Vorkehrungen aufweist, die Unstetigkeiten, z.B. Wirbelungen, in den Luftstrom einführen.

3. Verfahren nach Anspruch 1 oder 2, dadurch gekennzeichnet, daß die Wasseroberfläche, z.B. durch ein quer zum Luftstrom angeordnetes Schaufelrad, in Wellenbewegung versetzt wird, und daß durch Zusammenwirken von Luftstrom und Wasserbewegungsvorrichtung die strömende Luft befeuchtet und mit Sauerstoff angereichert wird.

4. Luftreinigungs- und -befeuchtungsgerät, mit einem Ansaugteil, das eine Lufteintrittsöffnung, ein Filter an der Lufteintrittsöffnung und ein Gebläse mit Motor aufweist, mit einem Luftreinigungsteil, das eine UV-Entkeimungslampe besitzt, und mit einem Wasserführungsteil, in dem die entkeimte Luft in Kontakt mit Wasser gebracht wird, bevor sie in den Raum abgegeben wird, bei dem
a) der Wasservorrat eine in einr Wasserwanne (9) angeordnete Wassermasse mit großer Oberfläche stehenden Wassers ist,
b) die Wasserwanne (9) mit einer im Abstand darüberliegenden, abnehmbaren Abdeckplatte (13) abgedeckt ist,
c) ein Gehäuse (1, 9) einen zumindest teilweise geschlossenen Luftführungskanal (6, 16) aufweist, dessen einer Teil (6) innerhalb des Gehäuses ausgebildet ist und dessen anderer Teil (16) durch die Wasseroberfläche, die Seitenwände (14, 14 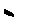 ) der Wanne (9) und die Abdeckplatte (13) über der Wasseroberfläche gebildet ist, und
d) das austrittsseitige Ende des Luftführungskanals (16) als Luftaustrittsöffnung (15) der Wanne (9) ausgebildet ist, die oben durch die Abdeckplatte (13), seitlich durch die Seitenwände (14, 14 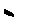 ) und unten durch die Wannenvorderwand (12) begrenzt ist.

5. Gerät nach Anspruch 4, dadurch gekennzeichnet, daß die Deckplatte (13) eine gewellte Platte ist, daß die beiden Seitenwände (14, 14') je eine obere Begrenzung der gleichen Wellung wie die Deckplatte (13) haben, und daß die Deckplatte auf die Seitenwände wellenkonform aufgesetzt ist.

6. Gerät nach Anspruch 4 oder 5, dadurch gekennzeichnet, daß im Gerätegehäuse (1, 9) ein Schaufelrad (17) mit Motorantrieb angeordnet ist, dessen Drehachse (23) quer zur Luftströmungsrichtung liegt und dessen Schaufeln in die Wasseroberfläche eingreifend angeordnet sind.

7. Gerät nach Anspruch 4, 5 oder 6, dadurch gekennzeichnet, daß die Wasseraufnahmewanne (9) vom Gerätegehäuse (1) lösbar, z.B. mit ihm steckbar ausgebildet ist.

8. Gerät nach einem der Ansprüche 4 - 7, dadurch gekennzeichnet, daß die beiden Gehäuseseitenwände (20) an der der Wanne (9) zugeordneten Stelle mit Ansätzen (21) versehen sind, die Lagerstellen für die Aufnahme der Schaufelradwelle (23) aufweisen.

9. Gerät nach einem der Ansprüche 4 - 8, dadurch gekennzeichnet, daß mit der Wasserwanne (9) eine Vernebelungs-bzw. Zerstäubungsvorrichtung (29), z.B. ein Ultraschallschwinger gekoppelt ist, die aus dem Wasservorrat der Wanne einen Wassernebel über der Oberfläche des Wasservolumens erzeugt bzw. den Wasservorrat in der Wanne in Schwingungen versetzt.

10. Gerät nach einem der Ansprüche 4 - 9, dadurch gekennzeichnet, daß die Wasserwanne (9) eine Pumpe (32) mit Zerstäuber (31) aufweist, die so angeordnet ist, daß sie einen Teil des Wassersvorrats aus der Wanne über der Wasseroberfläche zerstäubt.

11. Gerät nach einem der Ansprüche 4 - 10, dadurch gekennzeichnet, daß in der Wasserwanne, z. B. an der Abdeckplatte (13), eine sich etwa über die Wannenbreite erstreckende Wasserstaufläche (37; 38) vorgesehen ist, die den Luftkanal zwischen Abdeckplatte und Wasserfläche begrenzt, bzw. die in die Wasserfläche eintaucht, um den Luftstrom aus dem Gehäuse durch das Wasser zu führen und dabei zu reinigen.

12. Gerät nach einem der Ansprüche 4 - 11, dadurch gekennzeichnet, daß im Bereich des Überganges zwischen Gebläse und Wasserwanne eine aufrecht stehende Gewirk-oder Geflechtwand oder- fläche (39) vorgesehen ist, über die Wasser von oben nach unten geleitet wird.

13. Gerät nach Anspruch 12, dadurch gekennzeichnet, daß eine Wasserumlaufpumpe (43) mit einem Anschlußschlauch (42) innerhalb der Wanne und einem Abgabeschlauch (44) oberhalb der Gewirk- oder Geflechtwand (39) vorgesehen ist.

14. Gerät nach Anspruch 12 oder 13 dadurch gekennzeichnet, daß die Gewirk- oder Geflechtwand (39) aus Metall- oder Kunststoffmaterial mit möglichst großer Kontaktoberfläche besteht, und daß dem Wasser Salz zugesetzt ist.

15. Gerät nach einem der Ansprüche 12 - 14, dadurch gekennzeichnet, daß das die Gewirk- oder Geflechtwand (39) herabrieselnde Wasser an der obersten Stelle Zerstäubungsdüsen (41) durchläuft.

16. Gerät nach Anspruch 4, dadurch gekennzeichnet, daß das Filter (58) aus einem fest mit dem Gehäuse (57) verbundenen Innenträger (59), einem in das Gehäuse einrastenden oder daran lösbar befestigbaren Außenträger ((60) und einer zwischen Innenträger und Außenträger aufgenommenen, auswechselbaren Filtermatte, Filterflies oder dgl. (61) besteht.
